# EUROPEAN PATENT APPLICATION

(11) **EP 4 032 810 A1**
(43) Date of publication of application: **27.07.2022**
(21) Application number: 21153046.4
(22) Date of filing: 22.01.2021
(51) Int. Cl.: B64D 27/24, B64D 37/30, B64C 1/06, B64C 3/56, B64C 23/06

(54) **AIRCRAFT WITH ELECTRIC PROPULSION MODULE**

(71) Applicant: Blue Spirit Aero SAS, 92500 Rueil-Malmaison (FR)
(72) Inventor: VINCEKOVIC, David, Woodville, SA 5011 (AU); PASQUIET, Florian, 30650 Richefort du Gard (FR); SAVIN, Olivier, 92500 Rueil-Malmaison (FR)
(74) Representative: Schulze, Mark

(57) **Abstract**

An aircraft propulsion module comprises at least a hydrogen storage system, at least one electrochemical converter connected to the hydrogen storage system, wherein the at least one electrochemical converter is adapted to convert hydrogen supplied from the hydrogen storage system into electric energy; at least one electric motor electrically connected to the at least one electrochemical converter, wherein the electric motor is adapted to generate thrust; and at least one fastening means to attach the module to an aircraft.

## Description

The invention particularly relates to the electric propulsion of an aircraft using hydrogen as fuel for generating electric energy.

In the context of aviation, modules may be defined as airborne equipment anchored to a dedicated point on the aircraft's structure. Mainly used in the military field, they can provide different functions such as extension of the fuel capacity or weapons and external sensors carriage. On the Clip-Air project, presented by the Ecole Polytechnique Fédérale de Lausanne in June 2013, modules could even represent independent cabins to transport passengers.

Lately, distributed electric propulsion has been more and more developed for small aircraft regulated by the EASA Certification Specification CS-23 or in the drone industry for Advanced Air Mobility. The required power being less important than for large aircraft, electric motors represent a good compromise between flexibility and complexity for these aircraft that are less than 19 seats.

It is further known from the prior art to provide "electro-propulsive modules" distributed along a wingspan of an aircraft wing wherein the propulsion modules are embedded within the wing structure and only a hydrogen storage is removable. It is also known from the prior art to have propulsion modules wherein a wing structure is built around the modules with merged fairings.

Having power generating components embedded in a propulsion module is also known in the art, e.g., as disclosed by WO 2020/003181 A1, several modules are provided, each one of them carrying a hydrogen storage system in front of which is mounted a fuel cell supplying an electrical motor. The module can be swapped for a new one.

It is the **object** of the present invention to at least partially overcome the problems associated with the prior art. It is a particular object of the present invention to provide a hydrogen-powered aircraft that can easily be adapted to a variety of sizes.

The object is achieved according to the below described features, in particular as defined by the independent claims. Advantageous embodiments can be found, e.g., in the dependent claims and/or in the description.

The object is particularly achieved by an aircraft propulsion module, comprising at least:
- at least one hydrogen storage system adapted to store hydrogen,
- at least one electrochemical converter fluidically connected to the hydrogen storage system, wherein the at least one electrochemical converter is adapted to convert hydrogen supplied from the hydrogen storage system into electric energy;
- at least one electric motor electrically connected to the at least one electrochemical converter, wherein the electric motor is adapted to generate thrust;
- at least one fastening means to attach the module to an aircraft.

This gives the advantage that the modules can be multiplied in order to accommodate targeted performances. Since the wing structure and the modules are independent from each other and interchangeable (besides the fastening system principle), any aircraft manufacturer can benefit from this development. The modules can be easily dismountable with no heavy tooling, e.g., in a similar manner to Line Replaceable Units ("LRU").

The hydrogen storage system may be adapted to store gaseous, liquid and/or solid hydrogen. The hydrogen storage system may comprise at least one hydrogen storage unit for physically storing hydrogen, e.g., a hydrogen tank for storing gaseous and/or liquid hydrogen, a dedicated material (e.g., metal hydride, porous carbon, etc.) for chemical or physical solid hydrogen storage, etc. The hydrogen storage system may further comprise at least one piping network dedicated to supply the electrochemical converter with hydrogen coming from the hydrogen storage unit and/or at least one piping network which allows for external hydrogen refuelling.

For example, the electrochemical converter may be or comprise at least one fuel cell. For example, the electric motor may drive a propeller or other propulsion means.

Within the scope of this aspect of the invention is also the arrangement that, instead or additionally to the electric motor, at least one further electric load may be a component of the module.

It is an embodiment that the electric motor is adapted to drive a propeller of the module. However, the electric motor may also drive another kind of thrust means, e.g., a turbine.

It is an embodiment that
- the module comprises a first part and a second part that are disconnectable from each other,
- the first part comprising the at least one electrochemical converter and the at least one electric motor,
- the second part comprising the at least one hydrogen storage system.

This gives the advantage that, if one part becomes inoperable, the cause of inoperation will not propagate to the other part. Also, it is not necessary to replace the entire module, but it is possible to replace this one part only.

It is an embodiment that the first part and the second part are disconnectable from each other during operation of the module, e.g., in flight. It is an embodiment that the first part and the second part are disconnectable from each other during inoperation of the module, e.g., on ground, e.g., for parts swap, maintenance, or repair.

This gives the advantage if there occurs an inoperation or damage of one of the two parts, inoperation or damage of the other part is safely avoided even in flight.

It is an embodiment that at least one component of the aircraft propulsion module is detachable from the module during operation of the module, e.g., in flight. This gives the advantage that failed or failing components of the module can be removed from the vicinity of other components thereby enhancing safety. That the least one component of the aircraft propulsion module is detachable from the module may include that this component is moved outside a fairing of the module but still attached to the module and/or that this component is completely disconnected from the module and may consequently be ejected during flight.

That the at least one component of the aircraft propulsion module that is detachable from the module may include that this component is mechanically disengaged from a frame of the module. Furthermore, if applicable, electrical and/or fluid lines leading to this component like electric cables, tubes, pipes, etc. may be severed.

In particular, the full first part of the module may be detached from the aircraft.

The object is also achieved by an aircraft, comprising at least one of the aircraft propulsion modules as described above. The aircraft may be embodied in analogy to the module, and vice versa.

It is an embodiment that at least one of the aircraft propulsion modules is attached to a respective wing of the aircraft.

Additional and/or alternative features of this aspect of the present invention are described in more detail further below, for example under "A) Removable Propulsion Module".

The object is also achieved by a method to vary a wingspan of an aircraft, in particular an aircraft as described above, in which,
- when the root of an outer wing section is directly attached to the fuselage of the aircraft (i.e., without any wing extension section), this outer wing section is detached from the fuselage and then at least one wing extension section is inserted between and attached to this outer wing section and the fuselage, and in which,
- when a wing extension section is attached between the outer wing section and the fuselage, the wing extension section is detached and then the root of the outer wing section is directly attached to the fuselage.

This gives the advantage that a wingspan can be varied in a particularly easy manner.

It is an embodiment that each wing section comprises at least one of the propulsion modules as described above.

In analogy, each wing may comprise multiple wing extension sections.

Additional and/or alternative features of this aspect of the present invention are described in more detail further below, for example under "V - Wing Extension".

The object is also achieved by an aircraft, in particular as described above, being adapted to having its wingspan varied according to the method described above.

The object is also achieved by a method of producing fuselages of aircraft with different fuselage lengths out of a family of several aircraft, in which two half shells are produced, each half shell being produced by joining at least a front section and a rear section, wherein the front section and the rear section are identical for every aircraft of the family. A half shell may in particular be a right or left half of the fuselage in viewed from the front or the rear of the aircraft. This method gives the advantage that the length of the fuselage of an aircraft can easily adapted to different requirements, e.g., the number of seats, stowing volume, etc.

In particular, the family of aircraft may comprise a smallest (shortest) aircraft and at least one larger (longer) aircraft, wherein the fuselage is produced by joining the front section and the rear section. If desired, a middle section may be added in between. In one embodiment the smallest aircraft may be produced by joining only the front section and the rear section. The fuselage of a larger aircraft may be produced by inserting at least one middle section (or "mid section") between the front section and the rear section and subsequent joining of the sections. It is possible to vary the fuselages of the aircraft of the family by using different mid sections, e.g., different in form, function, and/or length.

The object is also achieved by an aircraft, in particular an aircraft as described above, in which a fuselage of the aircraft has been produced by the method described above.

Additional and/or alternative features of this aspect of the present invention are described in more detail further below, for example under "VI - Fuselage Extension".

However, the invention is not restricted to such a production method. For example, it is also possible to join the two halves of the front section, the two halves of the rear section, and - if so desired - the two halves of at least one mid section, and then to join the full front section, the full rear section, and - if available - the full at least one mid section. Such full sections may also be called "frames". However, the front frame, the rear frame, and/or the mid frame may also be produced by other methods, e.g., not involving half shells.

The object is also achieved by an aircraft, in particular an aircraft as described above, comprising at least one vortex generator, the at least one vortex generator being differentially deployable and retractable from an outer surface of the aircraft. Additional and/or alternative features of this aspect of the present invention are described in more detail further below, for example under "C) Vortex Generators".

It may be particularly advantageous to combine one or more aspects of the present invention. For example, it may be advantageous to use an enlarged wingspan when being used with a longer fuselage. Also, the wing sections may be equipped with the propulsion modules as described above which is particularly useful when a large number of modules is used. Furthermore, the outer wing section and/or at least one wing extension section may comprise vortex generators, etc., etc.

The object may be achieved by one or more of the following aspects:
- Removable propulsion module
   - Hydrogen storage system
   - Module attachment
   - Component isolation mechanism
   - Parts disconnection mechanism
- Wing extension
- Fuselage extension
- Vortex generators

Each of these aspects or sub-aspects thereof may be regarded as inventions of their own. Likewise, two or more of these aspects in combination may form an invention of its own.

### A) REMOVABLE PROPULSION MODULE

In general, the removable propulsion module provides an independent, autonomous, and removable part ("module") for thrust generation which, in principle, can be adapted on any aircraft. In particular, the propulsion module is not embedded in the wing or the fuselage of the aircraft but can be added to the aircraft structure by means of a simple fastening interface. In particular, the removable propulsion module comprises all means for propulsion and only needs to be mechanically attached to the aircraft (e.g., by at least one fastening means) and, potentially, can be brought in data communication with the aircraft (e.g., by being equipped with a wired and/or a wireless communication interface) to receive data for its operation.

As described above, the propulsion module may comprise at least on hydrogen storage system, at least on electrochemical converter and at least one electric motor.

In an embodiment that the propulsion module further comprises another means ("electric load") using or storing the electric energy generated by the electrochemical converter. Such an electric load may include at least one secondary power supply component, at least one electric and/or electronic component, etc. In particular, the electronic component may comprise or be an energy, power, and/or torque management unit, e.g., comprising a microcontroller, ASIC, FPGA, and/or a data communication interface, e.g., an ethernet interface, etc. It is an embodiment that the secondary power supply component is an electrochemical energy storage unit comprising, e.g., at least one rechargeable battery, and/or at least one super capacitor (e.g., a gold cap), etc.

It is one advantage of this propulsion module that its components can easily be tailored to customer's needs. For example, increasing the storage capacity of the hydrogen storage system may lead to an increase in range, changing the power of the electric motor may enable the aircraft to reach a greater top speed, adding a secondary power supply component may lead to a faster and shorter climb phase, etc. Those components may be off-the-shelf components that are easily accessible and affordable, and the appropriate component can be integrated into / added to the module for a tailored solution.

An aircraft may use a distributed propulsion architecture wherein propulsive power may in particular be provided by several identical propulsion modules. An advantage of using a distributed propulsion is safety standard improvement due to redundancy of the power supply. Thrust is not provided by only one single propulsion module but several propulsion modules provide the overall thrust meaning that one propulsion module represents only a fraction of the required power. Thus, the failure or inoperation of a propulsion module can be accommodated easily, and its replacement costs are rather low. Due to the relatively large number of such modules, a company can reduce costs due to scaling effects if they are interchangeable.

In contrast to the prior art, the present concept enables offering an off-the-shelf solution for future aircraft manufacturers in which they would only have to provide a fastening means for fastening the module of the present concept. Also, it is advantageous to have a means for data communication and/or control between the module and the aircraft. If energy, power, and/or torque management are included in the module, it is advantageously sufficient that information regarding required / requested values of energy, power and/or torque is transmitted to the module, and the module adapts itself accordingly, e.g., by adapting a hybrid repartition and/or a hydrogen consumption to supply the electric load, e.g., electric motor.

To reduce costs and shorten maintenance procedures, the propulsion module may be divided in several (i.e., at least two) parts that may be handled separately, in particular as described above. For example, the propulsion module may comprise a first part and a second part, wherein, e.g., the first part may be attached mostly in front of the wing profile while the second part may be positioned below a wing profile. Thus, the first part may be positioned in front of the second part. Alternatively, the first part may be attached at the rear of the wing and thus behind the second part. However, the arrangement of the first and second parts is generally not restricted.

In particular, the first part, presenting the power generating function(s) of the propulsion module, is attached to the wing profile to align a thrust vector with the chord of the wing. It may comprise a frame surrounded by a fairing to reduce drag penalty. Advantageously, the shape of the fairing of the first part may be continuous with the wing profile at the contact area, i.e., there are no sharp changes at the transition between the fairing of the first part and the wing profile. Fixed / attached to the frame may be at least one propulsive device (e.g., at least one electric motor with at least one propeller), at least one secondary power supply component like a battery, at least one electrochemical converter like a fuel cell.

Other components like, e.g., at least one cooling system, may also be fixed to the frame. The cooling system may be an active and/or a passive cooling system (or any other form of cooling) and may, in case of an active cooling system, thus also regarded to be an electric load.

In particular, the first part comprises three aspects that may be regarded as distinct inventions alone and/or in any combination, namely:
- a mechanism for installation and attachment of the first part itself (see section II below),
- a component isolation / release mechanism in case of a failed or inoperative component (see section III below), and/or
- a parts disconnection mechanism to separate the first part of the module from the second part, even if the two parts are connected by at least one channel (see section IV below).

The second part may be placed underneath the wing profile and comprises a hydrogen storage system hosting at least one hydrogen storage unit in a fairing, e.g., a hydrogen tank, and at least one piping network. Its fairing protects the hydrogen storage unit and the at least one piping network from external damages. It also creates a link between the wing and the hydrogen storage unit without having to modify the hydrogen storage unit. This is particularly advantageous if an off-the-shelf hydrogen storage unit is used. The hydrogen storage system is also a distinct invention (see section I below) alone and/or in combination with any of the inventions according to sections II to IV.

The first part and second part are connected via a feeding pipe exchanging hydrogen fluid between the second and first parts. Electric connection lines may be connected to different electronics of the first and/or second part of the module, e.g., for monitoring purposes. In the following, fluid connection lines (e.g., for supplying hydrogen) and electric connection lines (e.g., for supplying voltage, sending electrical signals, and/or data communication) may collectively called "channels".

Operation of the propulsion module may comprise at least one out of the group comprising the following four phases:
- "Normal operation": During cruise, descent or taxi, the electrochemical converter, as the primary power source, is designed to entirely supply the electric motor, hydrogen is pumped from the storage system and transformed into electric power by the electrochemical converter.
- "Peak supply": If the power required by the electric motor at a specific flight phase is greater than the maximum power produced by the electrochemical converter, in one embodiment, the power difference may be provided by the electrochemical energy storage unit being electrically connected in parallel to the primary power source.
- "Battery recharging": This task involves both parts of the module and is performed on ground or in flight. The primary power source generates electric power. If the propulsion module needs less power than what the electrochemical converter supplies, the excess electric energy is stored in the battery.
- "Refilling": This task only involves the hydrogen storage system. Advantageously, during refilling, the hydrogen storage unit may be separated from the other components so that maintenance tasks on the electric motor and/or on the powertrain equipment, etc. may be performed at the same time as refilling.

The connection between the first part of the module and the wing should be as compact as possible to reduce the frontal area of the module and thus the drag penalty. In one embodiment, notches may be provided in the wing profile to access the wing spar, which makes attachment easier. This embeds the module in the wing, therefore reducing the frontal area.

When the module generates thrust for the aircraft, the fastening system should be able to withstand and transfer important loads to the structure. Offsets of the centre of gravity and thrust vectors create torques that should be reacted to as well.

This attachment system should be suitable for every spanwise position, accommodating chord and thickness variations as well as twist and dihedral angles.

### I - Hydrogen storage system

Due to cost and/or aerodynamic considerations, a wing manufacturing process is unsuitable to accommodate an embedded hydrogen storage system. If the hydrogen storage system is an off-the-shelf component, it is not suitable to have it attached to an external support. This aspect explores a solution of a hydrogen storage housing system that can be easily replaced if damaged and which can accommodate hydrogen storage system replacement (maintenance, replacement) without any specific tool or long procedures.

### a - Hydrogen storage system housing

The hydrogen storage system housing comprises two parts, namely a core and a cap. The core is cylindrical (not necessarily presenting a circular cross-section), one end is open, and the other end presents a shape matching with the hydrogen storage unit's extremities. This end is holed to allow a head of the hydrogen storage unit (e.g., a bottle head) to be accessed when the hydrogen storage system is in the housing. The cap may be cylindrical, one end being open, and the other end being closed. The closed end comprises drilled holes so that air can circulate, therefore preventing hydrogen accumulation in an enclosed environment. The hydrogen storage system is slid in the core from the open end until the surface of the hydrogen storage system is in contact with the end of the housing. By now, the hydrogen storage unit's head is out of the hydrogen storage system housing and can be connected to supplying and feeding piping networks. When both surfaces touch each other, the cap can be fixed on the core and holds the hydrogen storage system in place.

### b - Hydrogen storage system housing link with the wing

Regarding the link between the hydrogen storage system housing and the wing, a rail may be fixed on the outer side of the storage system's fairing, parallel to the axis of revolution of the cylinder, it presents one or several side rods. A part with respective tracks carved in it may be mounted on the wing. When needed, the hydrogen storage system housing rail can be slid in the track to fix the hydrogen storage system housing to the wing. The rail may have a specific shape such that the hydrogen storage system housing cannot drop due to gravity. Movements may be limited by locks or track ends. For example, one of the following alternative lock systems may be used:
- Rotating lock. In one embodiment of a rotating lock, a piece is attached around an axis and can rotate only following a certain angle using stops. When the hydrogen storage system housing moves in the track, its side rod comes in contact with an inclined plane of the rotating piece making it turn around its axis while permitting the hydrogen storage system housing to keep moving. As it keeps moving, the rod is not in contact anymore with the rotating piece, allowing it to go back to its initial state, pushed back by a mechanical device or attracted by gravity. If now the hydrogen storage system housing moves the other way around, the piece blocks that way and cannot rotate due to the stop. To liberate the hydrogen storage system housing, an external action is required to push the hydrogen storage system housing, to rotate the lock and to hold it as such while pulling the hydrogen storage system housing out of the rail.
- Sliding lock. In one embodiment of a sliding lock, a piece is guided by a part on the side of the track. When the hydrogen storage system housing moves, its side rod enters in contact with an inclined plane of the sliding piece making it go up while permitting the hydrogen storage system housing to keep moving. As it keeps moving, the rod reaches a notch in the contact plane and the sliding piece can move back to its initial stage, attracted by gravity, or pushed back by a mechanical device, locking up the rod in that notch. The hydrogen storage system housing is held in position and can neither move forward nor backward. To liberate the hydrogen storage system housing, an external action is required to push the lock to free the notch and to hold it as such while pulling the hydrogen storage system housing out of the rail.

### II - Module attachment

An analysis of failure modes highlighted the fact that most of the components with a likelihood to fail or to become inoperative are gathered in one part of the module. The module's design aims at a Line Replaceable Unit to increase the availability of the aircraft by reducing the down time due to the maintenance procedures. Instead of repairing or working on the module on the aircraft, which may reveal a complex operation depending on the location of the failure, the inoperative module will be dismounted and replaced by a fully operating unit. This task should not require special tools and should be executed as fast as possible.

As disclosed above, the propulsion module may be divided in several parts, e.g.:
- The first part comprising a frame to which are attached at least the components required to convert energy and provide thrust; and
- The second part comprising the hydrogen storage system, in particular including the refilling system / network and a feeding connector for the electrochemical converter, e.g., a fuel cell, of the first part.

This aspect focuses on the first part and how it may be attached to the main structure of the aircraft. To this effect, the back of the frame of the first part may comprise one or several rails. Holes may be drilled at the back of the frame to receive holding pins. The bottom of the frame may be manufactured to avoid sharp edges allowing a smooth contact between the pins and the frame when slid down into the track.

The wing profile may be equipped with one or several tracks, their shape will guide the rail along one axis and retain it from moving along the two other axis. Those tracks will be closed at one end and have an entry point at the top.

One or several pins controlled by actuators or handles may be fixed to the track and can move forward and backward. One end may be manufactured to avoid sharp edges allowing a smooth contact with the frame when slid down into the track.

When put in place, the first part of the module may be slid along the track guided by the rail. When reaching the pins, the two surfaces come into contact, thus pushing the pins backward and freeing the way for the frame which can keep moving. Having kept going down, the pins now face the holes at the back of the frame and can move forward, pushed by the maintenance staff or a spring, to fill the gaps. When it is in place, the frame cannot go further down or up. The first part may be connected to the rest of the module (i.e., the second part) by at least one channel, e.g., at least one fluid connection line and/or at least one electric connection line.

When the first part of the module needs to be removed, the pins may be pulled back to free the gaps of the frame, held in that position while the fairing can now be slid out of the track to be replaced.

### III - Component isolation mechanism

The propulsion module consists of several components whose individual failure modes could cause damages to neighbouring components. From a safety point of view, being able to move away/separate a component which is in a failed mode is advantageous. Thus, the propulsion module may comprise at least one dedicated mechanism (without loss of generality called "component isolation mechanism") that releases one or more components of the module from the module. For improved safety reasons, this mechanism may be adapted to ensure that the component remains attached to the aircraft outside its housing.

Under nominal conditions, such a component may, for example, be held by several axles making sure that it is attached to the frame. Those axles would be retained by R-clips or snap rings, for example, but other means can also be employed. The snap rings are designed to withstand the loads during normal flight conditions.

If a degraded condition or an emergency situation regarding such a component is noticed by the pilot or automatically via a control system, it is advantageous if this component can be isolated from the rest of the propulsion module. To achieve this, in one embodiment, the axles can be pulled by a linkage system from the cabin and/or via a remotely controlled actuator. The pulling load is determined to be greater than the load experienced under normal conditions leading the R-clips, the snap rings, or any other system to act as mechanical breakers. The axles can then be pulled the way, thus separating the involved component from the structure. When all the attachment points are free, gravity may pull the released component downward out of its module and/or a mechanical system may push it out of its module.

To this effect, a hatch in the surrounding fairing may allow the involved component to evacuate the enclosed environment. To prevent the component from hitting the wing or the module, a pole may be extended guiding the component during the initial phase of its fall. To avoid any injury resulting from the system release, it advantageously remains attached to the module, e.g., via a simple mechanical cable. Under normal conditions, this cable is wound in a spool stored in the module, one end being attached to the component and the other end being attached to the spool. When the component is commanded to be dropped, the hatch opens, the spool unfolds, and the component slides along the pole and then hangs by the cable at a safe distance from any structural part of the aircraft. When flying close to an airport and over a safe dropping zone, the spool-attached end may be released, and the component is dropped to the ground in a known area when it can be retrieved. The aircraft lands safely without risking tangling the cable with the propellers or the wheels during the deceleration phase.

### IV - Parts disconnection mechanism

This aspect relates to disconnecting a total part of the module (e.g., the first part) instead of only isolating single components. It may be based on the fixation solution presented in section II. In an exemplary embodiment, the difference lies in the fact that the rails may be open at the bottom, meaning that the system can be released at any time by pulling on the pins. Both rail and track may have openings (e.g., in the centre), respectively. These openings create a pathway between the first and second parts of a module where at least one channel, for instance to transfer fluid and/or data and/or power, are pulled from the second part to connect to the components in the first part. Embodiments of said channels may be without loss of generality, a cable and/or pipe.

When the first part is uncoupled from the aircraft, the rail slides down the track such that (a) channel(s) are stuck between the two openings' edges, there being subject to a significant shear load / shearing force. This shear load cuts the involved channel(s). To facilitate that split, the edge of at least one of the openings is sharp and also may be inclined to act as a kind of sharp blade. Having an inclined edge advantageously concentrates the shear load on one specific side of the channel(s) to be cut, increasing the stress and facilitating the cutting.

### B) WING AND FUSELAGE EXTENSION

The underlying concept of the wing and fuselage extension comprises a family of aircraft of different size using wing and fuselage extensions. Having a similar wing and fuselage shape throughout the entire family of aircraft allows reusing as many parts between the different versions of aircraft. This is particularly advantageous because of cost reduction and upholding know-how by having fewer references produced in more units rather than many references which are used every now and then. It also helps with production planning and manufacturing facilities. The wing and fuselage extensions comprise two distinct aspects that are - alone and/or in combination - inventions in themselves. These two aspects, namely a wing extension (see section V) and a fuselage extension (see section VI), are now be described in more detail:

### V - Wing extension

The family of aircraft may comprise a smaller version and at least one larger version. A larger version may reuse the wing of the smaller version.

In order to accommodate the mass increase and the modifications of the required performances leading to a larger wing area, in an embodiment, an extension kit may be added between the fuselage and the root of the reused aircraft component. The wing may be attached to the fuselage, e.g., via one or several spars. For example, the wing root may represent the male part of the attachment and the fuselage may represent the female part. This extension preferably uses the same fastening system as the one used for the smaller version. Advantageously, the root of the section hosts the same attachment system as the one on the fuselage, so that the wing can be fastened to it. The root of the extension advantageously has a structural element protruding, just like the wing root, which is then attached to the fuselage, e.g., a centre section thereof.

Producing more units advantageously reduces costs thanks to scale effects. Moreover, investments can be made for heavier and more precise production means since their fixed cost will be absorbed by a greater number of units. If damaged, each section can be replaced independently, thus reducing maintenance costs. Stocks are more optimized because the wing can be used for several versions of the family. Since the wing has proven its capabilities to withstand loads for the smaller version, the improvement will be faster to design because there is a smaller section to design. Inputs at the tip of the extension kit will be the load at the root of the wing.

Having two distinct sections will create small gaps at the junction which could disturb the aerodynamic flow. To prevent this phenomenon, junctions are advantageously covered by one ply of glass fibre, or a resin seal may be added. Discontinuity of the material may require larger thickness or additional fastening means to transfer the loads. This may increase the criticality of the section and increase the overall mass. Also, it will be more time-consuming to produce one wing part and a small extension rather than one single large wing because there are more composite pieces to stack and align in the moulds.

### VI - Fuselage extension

Additionally or alternatively to variations in the number of modules and/or the wingspan, the cabin arrangement including the number of seat rows and salons may be varied using fuselage extension. Advantageously, the nose / front / cockpit section remains the same, making it easier for a pilot to switch from one version to another. The tail / rear section may or may not be the same. However, having the same configuration (e.g., T-configuration) gives the advantage that the rear beam / rear section can be similar throughout the entire series.

The fuselage may, for example, be manufactured as two half shells, then connected (e.g., stitched) to each other to form the final shape. One embodiment comprises having each half-shell's mould composed of at least two interconnected parts (for example, without loss of generality, called the nose / front / cockpit section and the tail / rear section) and a cabin / mid section. Depending on the kind of aircraft, one may swap at least one mid section, but keep the same front and rear sections, for example.

As stated before, the fuselage may be divided in several parts, each part containing a specific set of functions. For example, these parts may have the following properties:
- The (full) front section may be similar to all the aircraft of the family. It may, e.g., contain one door for the cabin access. There may be a front row for the pilot and passenger no.1 with the associated commands. In front of them may be displayed cockpit information. Further up front, there may be a nose cone, advantageously empty, to which a front landing gear is attached. Not having any system within that nose cone advantageously allows using a retractable landing gear.
- At least one (full) middle section may be dedicated to a given aircraft, i.e., be different for aircraft of different length and/or different functionalities. The middle section hosts the wing attachment system. The wing attachment system is similar for every aircraft of the family, but dimensions may vary depending on the aircraft mass. The main landing gears are attached to the fuselage, their size is adapted to the aircraft's mass and centre of gravity range. Finally, passengers' seats may be installed, e.g., several rows all facing in the same direction or salon(s) with pair(s) of rows facing each other. Each row can contain three seats for economic versions or two seats for more spacious/roomier VIP versions, for example. The middle section may also contain a luggage compartment since the luggage volume will depend on the number of passengers transported. Wings position and root sections may be different from one variant to another. It is not likely to have the attachment system placed in a section which is common to every version.
- The (full) rear section may be similar for all aircraft. For example, one or more hatches may permit access to systems such as an air conditioning system and/or a flight control computer.

The design of the rear section advantageously considers the fact that it will be used on the larger versions of the aircraft. In this case, the lever arm is more important than on the smaller version due to the extra row of passengers, while the size difference might not be too penalizing. However, it may be advantageous to have a slightly oversized wing for the smaller version of the aircraft. The smaller version would benefit from that oversize because it increases the margin of error and flyability, e.g., for pilot trainees.

### C) VORTEX GENERATORS

Vortex generators are flow control devices that are used to re-energize the fluid within the boundary layer of a surface with the primary purpose of delaying the separation of flow. Particularly, this aspect relates to the differential actuation of said vortex generators so that they can be deployed and stowed dynamically depending on the vehicle's maneuver to improve the aerodynamic characteristics of surfaces.

It is well known from the prior art that aerodynamic characteristics of surfaces can be modified by generating vortices over them, this being beneficial in some cases and detrimental in others. A common use case for vortex generators is to place them in locations on the upper surface of a lifting surface, thereby delaying the separation of flow over the surface. As fluid flows over a lifting surface, the pressure decreases until it reaches the centre of lift. Then, the pressure will increase such that the fluid flows from a low-pressure region to a high-pressure region. This phenomenon is known as "adverse pressure gradient", namely because the flow will dissipate energy which leads to the onset of flow separation. By creating vortices, higher momentum fluid further from the surface can be mixed with fluid near the surface, which re-energizes the flow and delays its separation from the surface.

Vortex generators used in certain low-speed flight conditions have produced improvements in maneuver effectiveness. However, vortex generators that are permanently fixed and exposed to the flow are disadvantageous during flight conditions in which flow separation is not an issue as they produce drag penalties. Furthermore, they are susceptible to accrue foreign object debris such as ice that may significantly reduce the performance of the aircraft and may lead to undetected damage, in turn leading to unexpected flight behaviour. Also, actuated or retractable vortex generators are generally known from the prior art:
US 4,039,161 discloses a particular configuration of vortex generators that are connected to a control surface in front of its hinge line such that as the control surface is deflected, the vortex generators are projected into the air flow on the opposite side of the control surface's deflection.
US 5,253,828 discloses a plurality of concealed vortex generator devices that are flap actuated for lifting surfaces. When the flap is in the nominal position (non-extended), the vortex generator is unexposed. When the flap is actuated by a flap actuator, the flap is extended from its nominal position, which projects the vortex generator into an operation position.
US 2007/0018056 A1 describes vortex generators that have a pivot axis that forms an acute angle with respect to the predetermined direction and is capable of being positioned in both of an extended state, in which the respective vortex generators function to create a swirling fluid flow and a retracted state, in which the respective vortex generators are pivoted via the pivot axis to lie adjacent to the flow control surface.
US 8,657,238 B2 discloses at least one vortex generator being coupled to the leading edge of the lifting surface assembly and the vortex generator is extended through the lifting surface by drooping a hinged leading edge coupled to the lifting surface to increase lift. The vortex generator is retracted inside the lifting surface when the leading edge droop is retracted.

The present aspect of the invention, on the other hand, provides a flow control device and method that differentially actuates vortex generators from a stowed state to a deployed state and vice versa, depending on the vehicle's maneuver. This gives the advantage that the aerodynamic characteristics of surfaces are improved. This aspect may comprise an aircraft with at least one wing, the at least one wing comprising at least one vortex generator. Advantageously, at least one wing comprises multiple vortex generators.

Thus, at least one vortex generator can be actuated / extended at a time with varying magnitude, (e.g., fully extended or partially extended) whereby it is extended through the lifting surface to modify the flow behaviour of the lifting surface. Equivalently, at least one vortex generator can be retracted at a time in the same manner with varying magnitude. Thus, it is an embodiment that each vortex generator of a set of multiple vortex generators or a subgroup comprising several vortex generators of a set of multiple vortex generators may be actuated independently from other vortex generators or subgroups of vortex generators, respectively.

In low-speed configurations, at least one vortex generator can be actuated to re-energize the flow over a surface. This will delay the onset of flow separation and maintain an attached boundary layer for greater angles of attack. By doing so, the stall speed of the vehicle will be decreased, thereby improving the low performance characteristics of the vehicle. This method offers a simpler, lighter, and smoother leading edge solution compared to heavier and more complex leading edge high lift devices such as slats or slots that also introduce surface discontinuities.

In a cruise configuration, lifting surfaces will exhibit a smooth low drag flow without disturbances caused by actuated vortex generators which would have otherwise transitioned the flow to turbulence. For the general cruise case, it is undesirable to force the transition of flow to turbulence by vortex generators as the vehicle is not operating at high angles of attack where flow separation is an issue.

This method also allows for asymmetric deployment of vortex generators over a surface. For example, to increase the control authority of a single wingtip control surface (aileron) during a roll maneuver, as one wingtip experiences an increase in angle of attack while the other wingtip experiences a decrease in angle of attack depending on whether the vehicle is ascending or descending. Thus, it is an embodiment that at least one vortex generator of one wing can be actuated independently from at least one vortex generator of the other wing (in a two-wing configuration).

In one embodiment of the device and method, the vortex generators are connected to trailing edge control surfaces, whereby several disconnected control surfaces (such as flaps or ailerons) can be actuated independently. In another embodiment, the vortex generators can be actuated independently from the control surfaces to allow for a greater degree of flow control.

This aspect of the invention is not limited to lifting surfaces, such as a wing or horizontal tail, but can also be applied to a fuselage or fairing.

The above-described features and advantages of the invention as well as their kind of implementation will now be schematically described in more detail by at least one embodiment in the context of one or more figures.
- Fig.1: shows an oblique view on a cutaway drawing of a propulsion module according to an embodiment of the invention;
- Fig.2: shows a cross-sectional side view of a propulsion module according to another embodiment of the invention;
- Fig.3: shows, in a cross-sectional side view, a sketch of a hydrogen storage system of the propulsion module of Fig.2;
- Fig.4: shows, in a cross-sectional side view, a sketch of a rotating lock to lock a link of the hydrogen storage system of Fig.3 with a wing of an aircraft, e.g., as shown in Fig.6;
- Fig.5: shows, in a side view, a sketch of a sliding lock to lock a link of the hydrogen storage system of Fig.3 with a wing of an aircraft, e.g., as shown in Fig.6;
- Fig.6: shows, in an oblique view, a sketch of a link of the hydrogen storage system with a wing of an aircraft;
- Fig.7: shows, in a cross-sectional side view, a sketch of several positions during attachment of a first part of the module to the main structure of an aircraft wing of an aircraft;
- Fig.8: shows different views regarding the attachment of the first part of the module to the main structure of the wing;
- Fig.9: shows a cross-sectional side view and a front view of a component isolation mechanism according to a first embodiment;
- Fig.10: shows a cross-sectional side view and a front view of a component isolation mechanism according to a second embodiment;
- Fig.11: shows several stages before and after activating a component isolation mechanism to release a battery in respective cross-sectional side views;
- Fig.12-14: show several stages before and after activating the component isolation mechanism_of Fig.9;
- Fig.15: shows an oblique view on a rail for use in a parts disconnection mechanism;
- Fig.16: shows an oblique view on a track for use in the parts disconnection mechanism;
- Fig.17: several phases or stages of disconnecting a first part of the propulsion module from the aircraft;

- Fig.18: shows a top-down view on detached wing sections and a fuselage;
- Fig.19: shows a top-down view on the fuselage with the wing sections attached;
- Fig.20: shows a diagram describing varying between a smaller aircraft and a larger aircraft of the same aircraft family;
- Fig.21: shows a side view of a larger aircraft (above) and a smaller aircraft (below) of the same aircraft family with identical front and rear sections;
- Fig.22: shows an oblique view of a wing section with two sets of actuated or deployed vortex generators and one set of stowed vortex generators;
- Fig.23: shows a cross-sectional side view of a wing section with an actuated / deployed vortex generator;
- Fig.24: shows a cross-sectional side view of a wing section with a stowed vortex generator;
- Fig.25: shows a cross-sectional side view of a wing section with a deployed vortex generator independently actuated from the trailing edge control surface;
- Fig.26: shows a cross-sectional side view of a wing section with a stowed vortex generator independently actuated from the trailing edge control surface;
- Fig.27: shows a cross-sectional front view of a fuselage or fairing section with an asymmetric distribution of stowed and deployed vortex generators;
- Fig.28: shows an oblique view of a fuselage or fairing section with an actuated / deployed vortex generator; and
- Fig.29: shows an oblique view of a fuselage or fairing section with a stowed vortex generator.

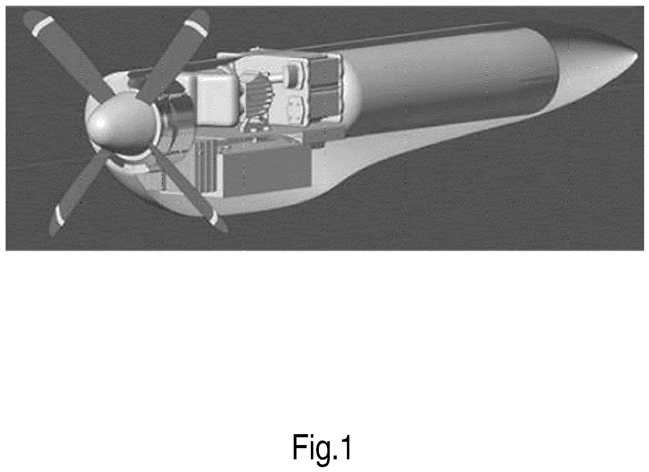

**Fig.1** shows an oblique view on a cutaway drawing of a propulsion module according to one possible embodiment including some of the components that were mentioned hereabove.

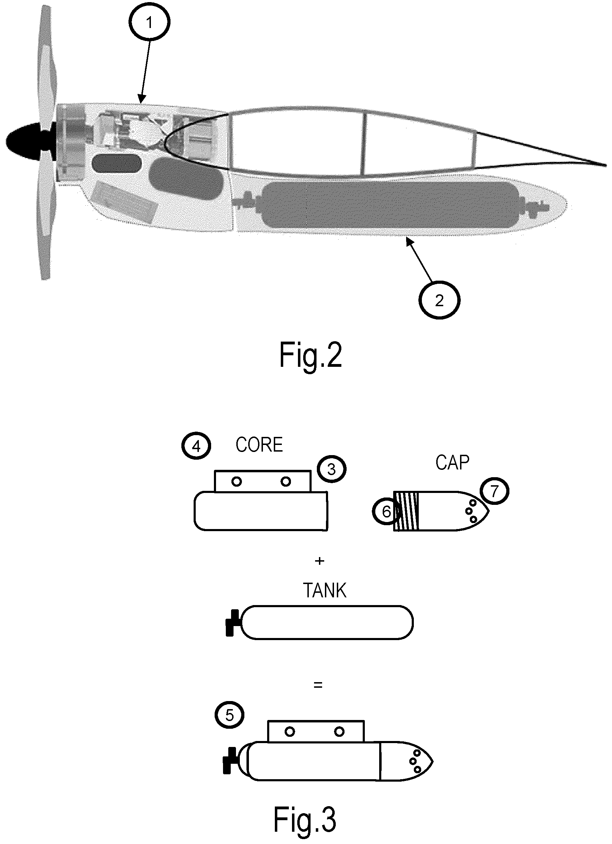

**Fig.2** shows a cross-sectional side view of a propulsion module 1, 2 according to another embodiment.

### A) PROPULSION MODULE ARRANGEMENT

To reduce costs and maintenance procedures, the propulsion module 1, 2 is divided in several parts.

A first part 1, presenting the power generating part, is attached to a wing (profile) W to align the thrust vector with the chord of the wing W. It comprises a frame surrounded by a fairing to reduce drag penalty. Fixed / attached to the frame are at least a propulsive device (for example, without loss of generality, a motor / engine / fan), a battery, an electrochemical converter in form of a fuel cell, and a cooling system. Other components may also be fixed to the frame. This first part 1 comprises three aspects that are distinct inventions alone and/or in any combination, namely: a mechanism for installation and attachment of the first part 1 itself (see section II below), a component isolation mechanism in case of a failed or inoperative component (see section III below) and a parts disconnection mechanism to liberate two parts that have been connected by channels (see section IV below).

A second part 2, which may be placed underneath the wing profile, as shown, hosts a storage system in a fairing. This fairing protects the hydrogen storage system from external damages. It also creates a link between the wing and the storage system without having to modify the storage system. This is particularly advantageous if an off-the-shelf storage system is used. The hydrogen storage system is also a distinct invention (section I) alone and/or in combination with any of the inventions according to sections II to IV.

Both parts 1 and 2 are connected via a feeding channel exchanging hydrogen fluid between the second and first parts. At least one channel may be connected to different elements of the first and/or second part of the module, e.g., for monitoring purposes.

Operation of the module may comprise at least one out of the group comprising the following four phases:
- "Normal operation": such as, without loss of generality, cruise and/or descent and/or taxi, the primary power source is designed to entirely supply the motor, hydrogen is discharged from the storage system and transformed into electric power by at least one electrochemical converter;
- "Peak supply": if the power required by the module at a specific flight phase is greater than the maximum producing power of the fuel cell, the difference may be provided by the battery in parallel to the primary power source;
- "Battery recharging": this task involves both parts of the module and is performed on ground or in flight. The primary power source generates electric power. If the engine needs less power than what the source supplies, the excess electric energy is stored in the battery.
- "Refilling": this task only involves the storage system. Advantageously, during refilling, the energy storage part is separated from the other components so maintenance tasks on the motor or on the power generating equipment may be performed at the same time.

The connection between the first part of the module and the wing should be as compact as possible to reduce the frontal area of the module and thus the drag penalty. In one embodiment, notches may be provided in the wing profile to access the wing spar, which makes attachment easier. This embeds the module in the wing, therefore reducing the frontal area.

When the module generates thrust for the aircraft, the fastening system should be able to withstand and transfer important loads to the structure. Offsets of the centre of gravity and thrust vectors create torques that should be reacted to as well.

This attachment system should be suitable for every spanwise position, accommodating chord and thickness variations as well as twists and dihedral angles.

### I - Hydrogen storage system

Due to cost and/or aerodynamic considerations, a wing manufacturing process is unsuitable to accommodate an embedded hydrogen storage system. If the hydrogen storage system is an off-the-shelf component, it is not suitable to have it attached to an external support. This aspect explores a solution of a hydrogen storage housing system that can be easily replaced if damaged and which can accommodate hydrogen storage system replacement (maintenance, replacement) without any specific tool or long procedures.

### a - Hydrogen storage system housing (Fig.3)

The hydrogen storage system housing shown in Fig.3 comprises two parts, namely a core and a cap. The core is cylindrical (not necessarily presenting a circular cross-section), one end 3 is open and the other end 4 presents a shape matching with the hydrogen storage unit's extremities. This end is holed to allow a head of the hydrogen storage unit (e.g., a bottle head) to be accessed when the hydrogen storage system is in the housing 5. The cap is cylindrical, one end 6 is open and the other end 7 is closed. The end 7 comprises drilled holes so that air can circulate preventing hydrogen accumulation in an enclosed environment. The hydrogen storage system is slid in the core from the open end until the surface of the hydrogen storage system is in contact with the end 4 of the housing. By now, the hydrogen storage unit's head is out of the hydrogen storage system housing 5 and can be connected to supplying and feeding piping networks. When both surfaces touch each other, the cap can be fixed on the core and holds the hydrogen storage system in place.

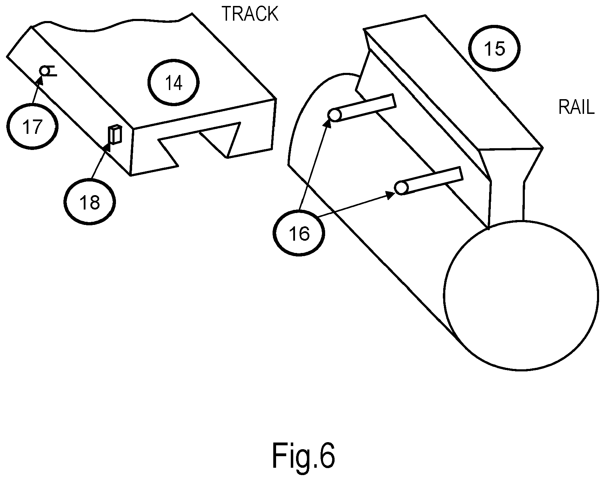

### b - Hydrogen storage system housing link with the wing (Fig.6)

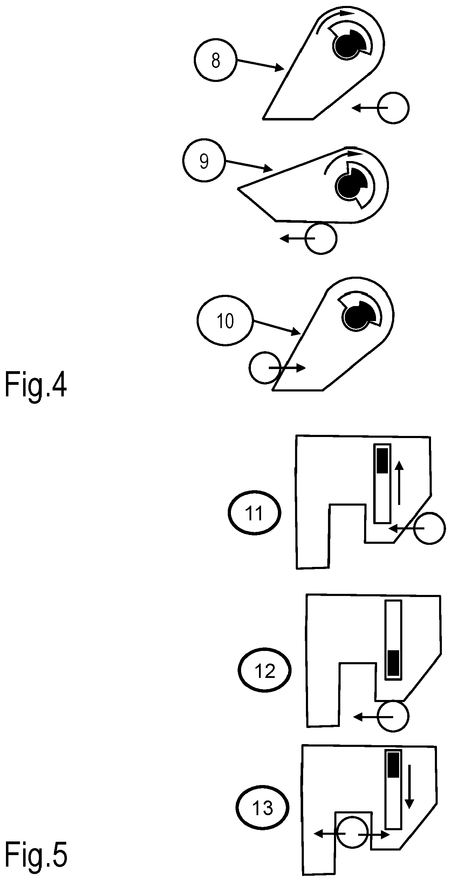

A rail 15 is fixed on the outer side of the storage system's fairing, parallel to the axis of revolution of the cylinder, it presents one or several side rods 16. A part 14 with tracks carved in it is mounted on the wing. When needed, the hydrogen storage system housing rail can be slid in the track to fix the hydrogen storage system housing to the wing. The rail has a specific shape so the hydrogen storage system housing cannot drop due to gravity. Movements are limited by locks, or track end. For example, one of the following alternative lock systems may be used:
- Rotating lock **(****Fig.4****):** a piece is attached around an axis (17) and can rotate only following a certain angle using stops. When the hydrogen storage system housing moves in the track (8) its side rod enters in contact with an inclined plane of the rotating piece making it turn around its axis while permitting the hydrogen storage system housing to keep moving. As it keeps moving (9) the rod is not in contact anymore with the rotating piece, allowing it to go back to its initial state, pushed back by a mechanical device or attracted by gravity. If now the hydrogen storage system housing moves the other way around (10) the piece blocks that way and cannot rotate due to the stop (line). To liberate the hydrogen storage system housing, an external action is required to push the hydrogen storage system housing, to rotate the lock and to hold it as such while pulling the hydrogen storage system housing out of the rail.
- Sliding lock (**Fig.5**): a piece is guided by a part on the side of the track (18). When the hydrogen storage system housing moves (11) its side rod enters in contact with an inclined plane of the sliding piece making it go up while permitting the hydrogen storage system housing to keep moving. As it keeps moving (12) the rod reaches a notch in the contact plane and the sliding piece can move back to its initial stage, attracted by gravity, or pushed back by a mechanical device, locking up the rod in that notch. The hydrogen storage system housing is held in position (13) and can neither move forward nor backward. To liberate the hydrogen storage system housing, an external action is required to push the lock to free the notch and to hold it as such while pulling the hydrogen storage system housing out of the rail.

### II - Module attachment

An analysis of failure modes highlighted the fact that most of the components with a likelihood to fail or to become inoperative are gathered in one part of the module. The module's design aims at a Line Replaceable Unit to increase the availability of the aircraft by reducing the down time due to the maintenance procedures. Instead of repairing or working on the module on the aircraft, which may reveal a complex operation depending on the location of the failure, the inoperative module will be dismounted and replaced by a fully operating unit. This task should not require special tools and should be executed as fast as possible.

The module may be divided in several parts:
- A first part comprising a frame to which are attached at least the components required to convert energy and provide thrust;
- A second part composed of a storage system, the refilling system and a feeding connector for the fuel cell placed in the other part of the module; and

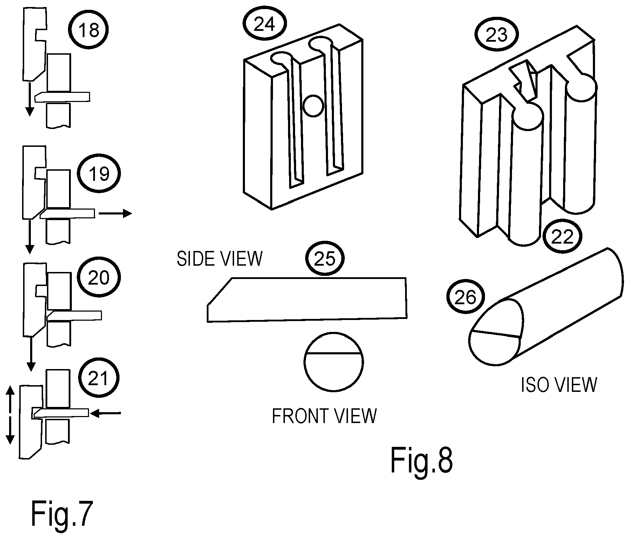

This aspect focuses on the first part and how it is attached to the main structure of the aircraft **(****Fig.7** and **Fig.8****).**

As shown in Fig.8, the back of the frame may comprise one or several rails (22). Holes may be drilled at the back of the frame to receive holding pins. The bottom of the frame may be manufactured to avoid sharp edges (23) allowing a smooth contact between the pins and the frame when slid down into the track.

The wing profile may be equipped with one or several tracks, their shape will guide the rail along one axis and retain it from moving along the two other axis. Those tracks will be closed at one end and have an entry point at the top (24).

One or several pins (25) controlled by actuators or handles are fixed to the track and can move forward/backward. One end is manufactured to avoid sharp edges (26) to allow a smooth contact with the frame when slid down into the track.

As shown in Fig.7, when put in place, the first part of the module is slid along the track guided by the rail (18). When reaching the pins, the two surfaces enter in contact (19) pushing the pins backward and freeing the way for the frame which can keep moving. As it keeps going down (20) the pins now face the holes at the back of the frame and can move forward, pushed by the maintenance staff or a spring, to fill the gaps (21). When it is in place the frame cannot go further down/up. The first part can be connected to the rest of the module by data and feeding channels.

When the first part of the module needs to be removed, the pins can be pulled back to free the gaps of the frame, held in that position while the fairing can now be slid out of the track to be replaced.

### III - Component Isolation Mechanism

The module consists of several components whose individual failure modes could cause damages to neighbours. From a safety point of view being able to move away/separate a component which is in a failed mode is advantageous.

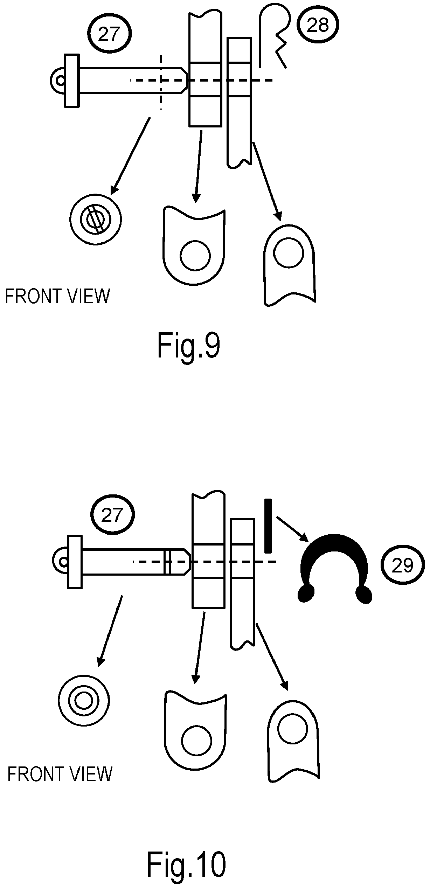

As shown in **Fig.9** and **Fig.10****,** during nominal conditions, such a component would be held by several axles (27) making sure that it is attached to the frame. Those axles would be retained by R-clips 28 (Fig.9) or snap rings 29 (Fig.10), for example, but other means can be employed. The latter is designed to withstand the loads during normal flight conditions.

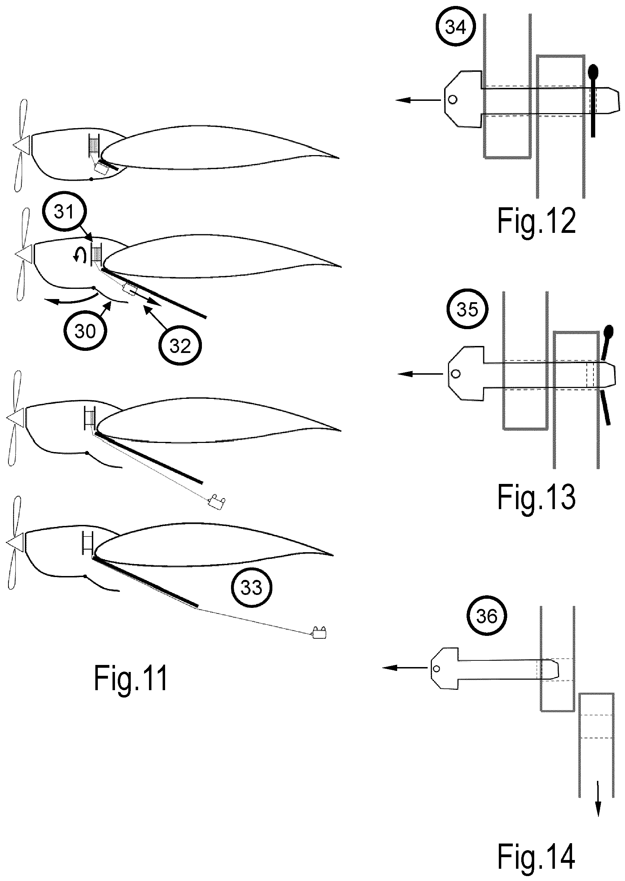

If a degraded condition or an emergency situation regarding such a component is noticed by the pilot or the computing system, requiring this component to be isolated from the rest of the propulsion module, the axles can be pulled (34) by a linkage system from the cabin or via an actuator remotely controlled, as shown in **Fig.12****.**

The pulling load is determined to be greater than the load experienced in normal conditions leading the R-clips, the snap ring or any other system to act as mechanical breakers (35), see **Fig.13****.** The axles can now be pulled all the way separating the involved component from the structure.

When all the attachment points are free the gravity pulls the system downward or a system pushes it out of the modules (36), see **Fig.14****.**

As shown in **Fig.11****,** a hatch (30) in the surrounding fairing will allow the involved element to evacuate the enclosed environment. To prevent the component from hitting the wing or the second part of the module a pole will extend (31) guiding the component during the initial phase of its fall. To avoid any injury resulting from the system release, it will remain attached to the module via a cable. In normal condition this cable is wound in a spool itself stored in the module, one end is attached to the system and the other end attached to the spool. When the component is commanded dropped, the hatch opens, the spool unfolds (32), and the system slides along the pole and then hangs by the cable at a safe distance from any structural part of the aircraft (33). When flying close to an airport and over a safe dropping zone, the spool-attached end is released, the system is dropped to the ground in a known area when it can be retrieved. The aircraft lands safely without risking tangling the cable with the propellers or the wheels during the deceleration phase.

### IV - Disconnecting technique

Object releasing methods can lead to improper disconnections due to excessive pulling loads on at least one channel. Nozzles which are easily disconnectable by a simple pulling action are usually not suitable for pressurized pipes. Moreover, if the pulling action is not aligned with the channel axis the side loads can damage the component's head. This aspect provides a solution for cutting the at least one channel rather than disconnecting them.

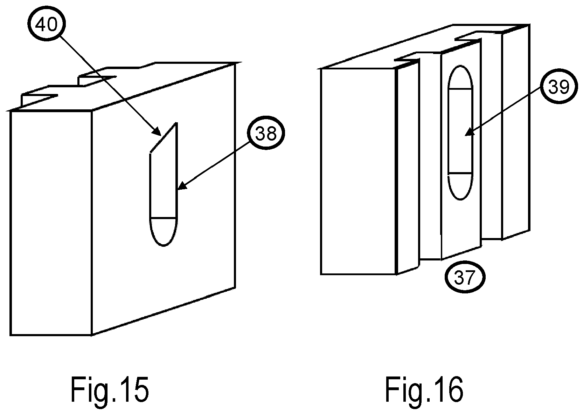

This aspect may be based on the fixation solution presented in section II. In the present exemplary embodiment, the difference lies in the fact that the rails are open at the bottom (37), meaning that the system can be released at any time by pulling on the pins (see **Fig.16****).** Both rail and track have openings in the centre (38) and (39), respectively, see **Fig.16** and **Fig.15****,** respectively. These openings create a pathway between two parts of a module where channels are pulled from the second part to get connected to the components in the first part.

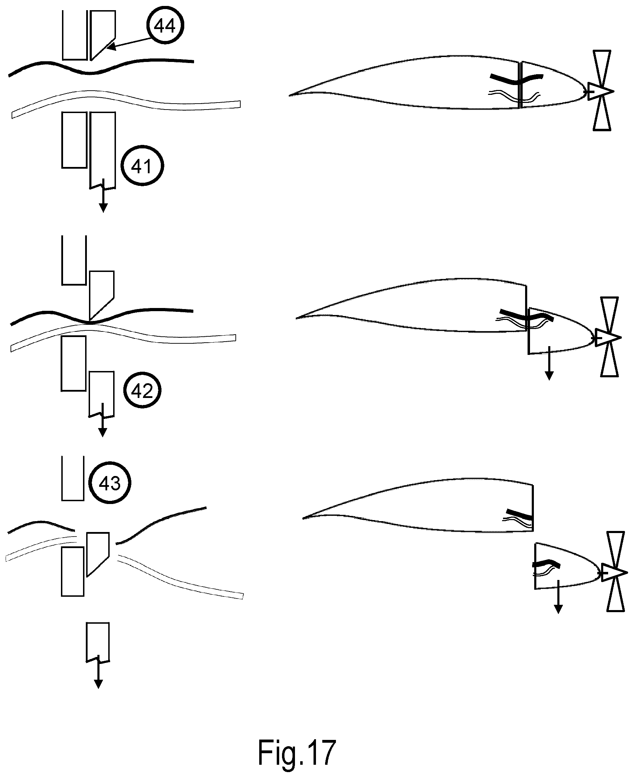

As shown in **Fig.17****,** when the first part is uncoupled from the aircraft, the rail slides down the track (41) and strikes the channels between the two openings' edges (42) creating an important shear load. This shear load allows cutting the channels (43). To facilitate that split, the edge of the opening is sharp and inclined (40 and 44) to act as a razor blade. Having an inclined edge will concentrate the load on one specific side of the part to be cut, thus increasing the stress and facilitating the cutting.

### B) WING AND FUSELAGE EXTENSION

### V - Wing Extension

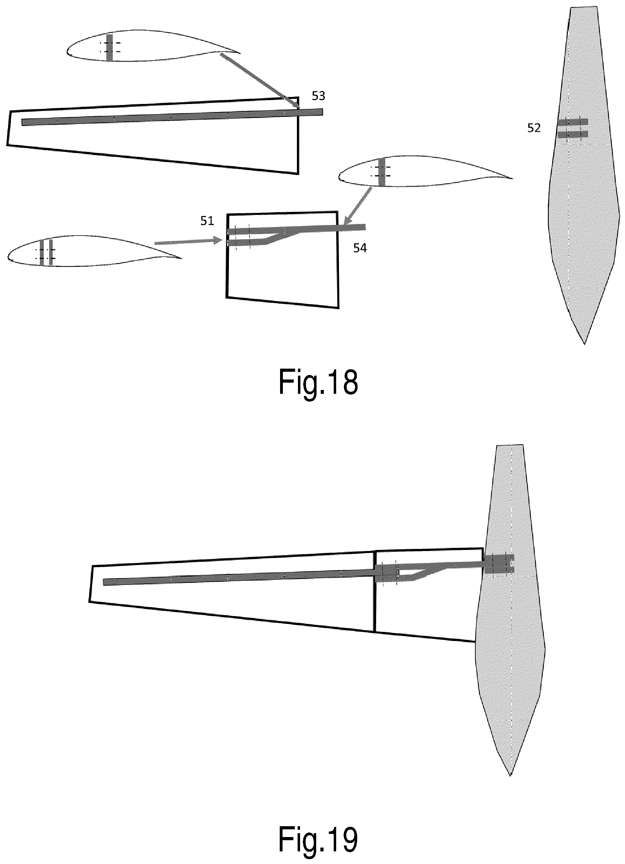

The family of aircraft may comprise aircraft composed of a smaller and at least one larger version. A larger version can reuse the wing of the smaller version. In order to accommodate the mass increase and the modifications of the required performances leading to a larger wing area, a wing extension (section) 54 shown in **Fig.18** can be added between the fuselage 52 and the root of the reused outer wing section 53, as shown in **Fig.19****.**

The wing may be attached to the fuselage 52 via at least one structural element. The shown wing root represents the male part of the attachment and the fuselage 52 represents the female part. A wing extension section 54 keeps the same fastening system as the one used for the smaller version. The tip of the wing extension 51 hosts the same attachment system as the fuselage 52 so that the root of the outer wing section 53 can be fastened to the tip 51 of the wing extension 54. The root of the wing extension 54 has a structural element protruding, just like the wing root section 53, which is then attached to a fitting (female) element of the fuselage 52.

This wing extension method reduces costs thanks to the scale effect. Moreover, investments can be made for heavier and more precise production means since their fixed cost can be absorbed by a greater number of units. Furthermore, if damaged, each section can be replaced independently, thus reducing maintenance costs. Stocks are more optimized because the wing can be used for several versions of the family. Since the wing has proven its capabilities to withstand loads for the smaller version, the improvement will be faster to design because there is a smaller section to design. Inputs at the tip of the extension kit will be the load at the root of the wing.

Having two distinct sections, however, will create small gaps at the junction which could disturb the aerodynamic flow. To prevent this phenomenon, junctions may be covered by material or a resin seal will be added. Discontinuity of the material will require more thickness or additional fastening means to transfer the loads. This will increase the criticality of the section and increase the overall mass. It will be longer to produce one wing part and a small extension rather than one big single-part entire wing because there are more composite pieces to stack and align in the moulds.

### VI - Fuselage Extension

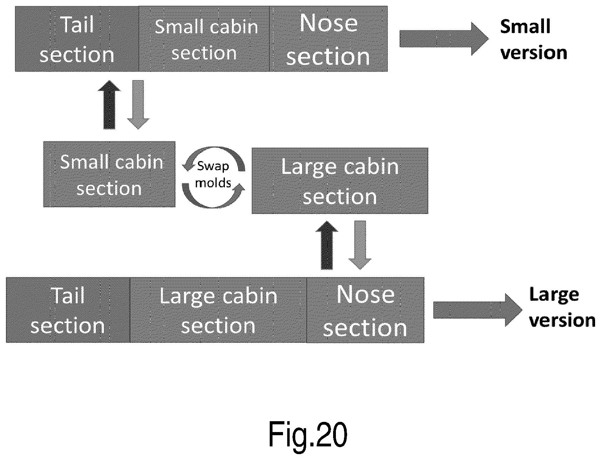

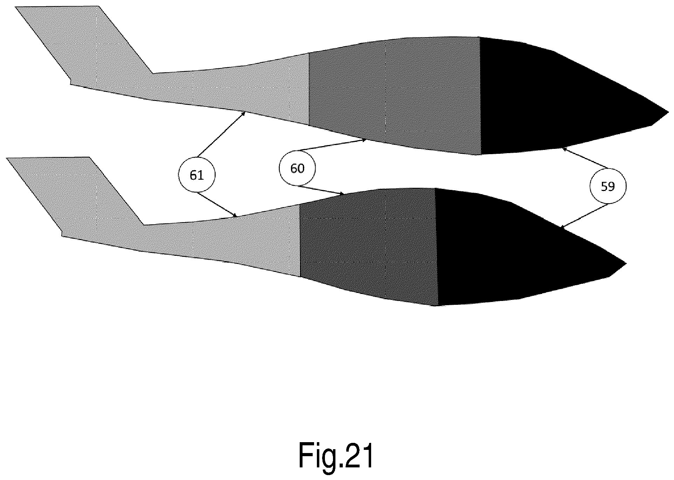

The fuselage may be manufactured as two half shells, which are connected to each other to form the final shape. The idea is to have each half-shell's mould composed of at least two, preferably of at least three interconnected parts (for example, without loss of generality, called the nose / front / cockpit section, the (optional) at least one cabin / mid section, and the tail / rear section). Depending on the kind of aircraft, one may swap at least one mid section, but keep the same front and rear sections, for example. As stated before, the fuselage is divided in several parts, each part containing a specific set of functions (see **Fig.20** and **Fig.21****):**
- The front section (59) similar to all the aircraft of the family: May, e.g., contain one door for cabin access. There may be a front row for the pilot and passenger no.1 with the associated commands. In front of them may be displayed the cockpit information. Further front there is the nose cone, preferably empty, where the front landing gear is attached. Not having any system in that nose cone allows a retractable landing gear solution.
- At least one middle section (60). Such a middle section hosts the wing attachment system whose principle is similar for each aircraft, but dimensions are different depending on the aircraft mass. The main landing gears are attached to the fuselage, their size is adapted to the aircraft's mass and center of gravity range. Finally, passengers' seats are installed, several rows all facing the same direction or salon(s) with pair(s) of rows facing each other. Each row can contain 3 seats for economic versions or 2 seats for more spacious/roomier VIP versions. This section also contains the luggage compartment since the luggage volume will depend on the number of passengers transported. The wing's position and root sections are advantageously different from one variant to another.
- A rear section (61) is preferably similar to all aircraft of the family: One or more hatches may permit to access systems such as the air conditioning system and/or calculator.

The initial design of the rear section considers the fact that it may be used on the larger versions of the aircraft. The lever arm being more important on the smaller version due to the extra row of passengers, the size difference might not be too penalizing, but it could be necessary to have a slightly oversized wing for the smaller version. The smaller version could also benefit from that oversize because it increases the margin of error for school pilots.

### C) VORTEX GENERATORS

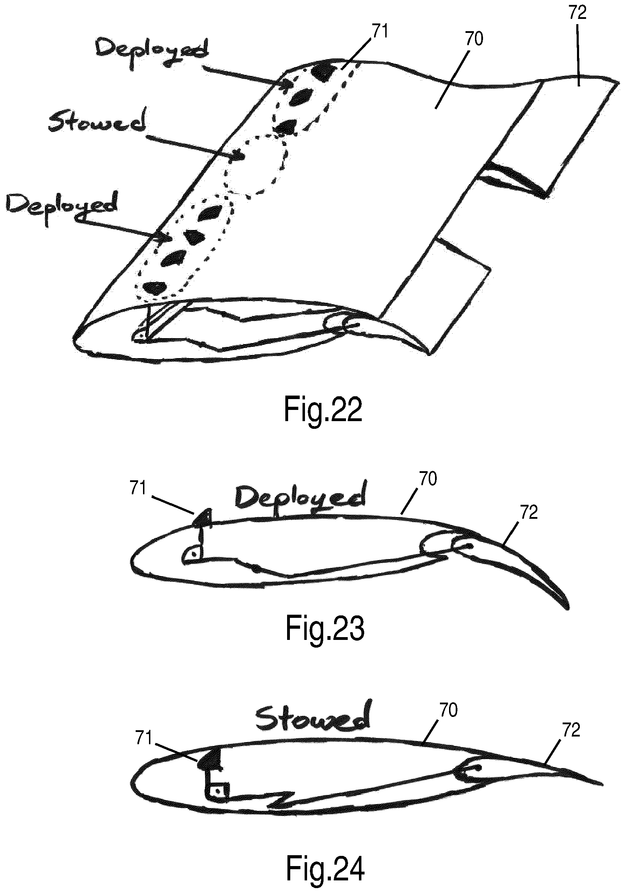

**Fig.22** shows an oblique view of a wing section 70 with two sets of vortex generators 71, namely one set of deployed vortex generators 71 and one set of stowed vortex generators 71.

The vortex generators 71 can be actuated from a stowed state to a deployed state and vice versa, depending on the vehicle's maneuver, to improve the aerodynamic characteristics of surfaces. At least one vortex generator can be actuated at a time with varying magnitude (e.g., fully extended or partially extended), whereby it is extended through the surface to modify the flow behaviour of the surface. Equivalently, at least one vortex generator can be retracted at a time in the same manner with varying magnitude.

In low-speed configurations (as shown in **Fig.23****),** at least one vortex generator 71 can be actuated to re-energize the flow over a surface. This in effect will delay the onset of flow separation and maintain an attached boundary layer for greater angles of attack. By doing so, the stall speed of the vehicle will be decreased thereby improving the low performance characteristics of the vehicle. This method offers a simpler, lighter, and smoother leading edge solution when compared to heavier and more complex leading edge high lift devices such as slats or slots that also introduce surface discontinuities.

In a cruise configuration (as shown in **Fig.24****),** surfaces will feature smooth low drag flow without the disturbance of deployed vortex generators 71 which would have otherwise transitioned the flow to turbulence. For the general cruise case, it is undesirable to force the transition of flow to turbulence as the vehicle is not operating at high angles of attack where flow separation is an issue.

This method also allows for asymmetric deployment of vortex generators over a surface (as shown in Fig.22). One use case is to increase the control authority of a single wingtip control surface (aileron) during a roll maneuver, as one wingtip experiences an increase in angle of attack while the other wingtip experiences a decrease in angle of attack depending on whether the vehicle is ascending or descending.

In one embodiment of the device and method, the vortex generators 71 would be connected to the trailing edge control surfaces 72, whereby several disconnected control surfaces (such as flaps or ailerons) can be actuated independently, as shown in Fig.23 for the deployed state and Fig.24 for the stowed state.

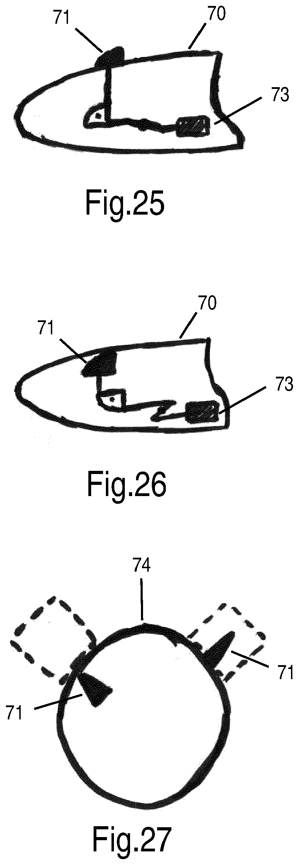

In another embodiment, the vortex generators can be actuated independently from the control surfaces, via an actuator 73, to allow for a greater degree of flow control (as shown in **Fig.25** for the deployed state and **Fig.26** for the stowed state.

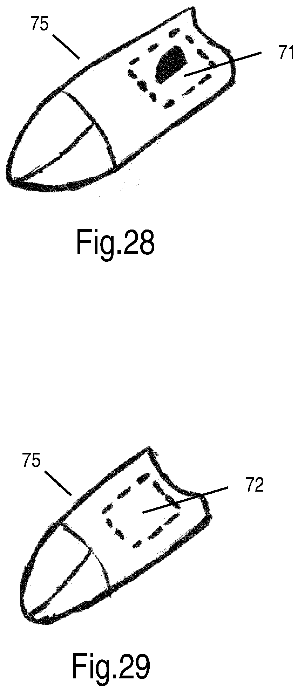

This invention is not limited to lifting surfaces, such as a wing or horizontal tail, but the disclosed method can also be applied to surfaces of a fuselage or fairing 74, as shown in **Fig.27** with a stowed vortex generator 71 on the left side and a deployed vortex generator 71 on the right side, **Fig.28** with a deployed vortex generator 71 and **Fig.29** with a stowed vortex generator 71).

A stowed vortex generator may be flush with the surrounding surface or may still protrude from the surrounding surface, but less than if in a deployed state.

Of course, the invention is not restricted to the described embodiments.

## Claims

1. An aircraft propulsion module, comprising at least
- a hydrogen storage system,
- at least one electrochemical converter connected to the hydrogen storage system, wherein the at least one electrochemical converter is adapted to convert hydrogen supplied from the hydrogen storage system into electric energy;
- at least one electric motor electrically connected to the at least one electrochemical converter, wherein the electric motor is adapted to generate thrust;
- at least one fastening means to attach the module to an aircraft.

2. The aircraft propulsion module according to claim 1 wherein the electric motor is adapted to drive a propeller of the module.

3. The aircraft propulsion module according to any of the preceding claims, wherein
- the module comprises a first part and a second part that are disconnectable from each other,
- the first part comprises the at least one electrochemical converter and the at least one electric motor, and
- the second part comprises the hydrogen storage system.

4. The aircraft propulsion module according to claim 3, wherein the first part and the second part are disconnectable from each other during operation of the module.

5. The aircraft propulsion module according to any of the preceding claims, wherein at least one component of the aircraft propulsion module is detachable from the module during operation of the module.

6. An aircraft, comprising at least one of the aircraft propulsion modules according to any of the preceding claims.

7. The aircraft according to claim 6, wherein at least one of the aircraft propulsion modules is attached to a respective wing of the aircraft.

8. A method to vary a wingspan of an aircraft, in particular the aircraft according to any of the claims 6 to 7, in which,
- when the root of an outer wing section is directly attached to the fuselage of the aircraft, this outer wing section is detached from the fuselage and then at least one wing extension section is inserted between and attached to this outer wing section and to the fuselage, and in which,
- when a wing extension section is attached between the outer wing section and the fuselage, the wing extension section is detached and then the root of the outer wing section is directly attached to the fuselage.

9. An aircraft, in particular according to any of the claims 6 to 7, being adapted to having its wingspan varied according to the method of claim 8.

10. A method of producing fuselages of aircraft with different fuselage lengths out of a family of several aircraft, in which two half shells are produced, each shell part being produced by joining at least a front section and a rear section, wherein the front section and the rear section are identical for every aircraft of the family.

11. An aircraft, in particular according to any of the claims 6, 7 or 9, in which a fuselage of the aircraft has been produced by the method according to claim 10.

12. An aircraft, in particular according to any of the claims 6, 7, 9, or 11, comprising at least one vortex generator, the at least one vortex generator being differentially deployable and retractable from an outer surface of the aircraft.
